# EUROPEAN PATENT SPECIFICATION

(11) **EP 2 013 604 B1**
(45) Date of publication and mention of the grant of the patent: **18.12.2019**
(21) Application number: 07718823.3
(22) Date of filing: 02.05.2007
(51) Int. Cl.: B01L 3/00, B01F 13/00, G01N 29/22

(54) **CONCENTRATION AND DISPERSION OF SMALL PARTICLES IN SMALL FLUID VOLUMES USING ACOUSTING ENERGY**
KONZENTRATION UND DISPERSION KLEINER PARTIKEL IN KLEINEN FLÜSSIGKEITSVOLUMEN UNTER VERWENDUNG AKUSTISCHER ENERGIE
CONCENTRATION ET DISPERSION DE PETITES PARTICULES DANS DE PETITS VOLUMES DE FLUIDE AU MOYEN D'ÉNERGIE ACOUSTIQUE

(30) Priority: 02.05.2006 AU 2006902258
(43) Date of publication of application: 14.01.2009
(73) Proprietor: ROYAL MELBOURNE INSTITUTE OF TECHNOLOGY, Melbourne, VIC 3000 (AU)
(72) Inventor: FRIEND, James, Robert, Brighton, VIC 3186 (AU); YEO, Leslie, Yu-Ming, Glen Iris, VIC 3146 (AU)
(74) Representative: Aulich, Martin
(86) International application number: PCT/AU2007/000576
(87) International publication number: WO 2007/128046

(56) References cited:
- WO-A1-2006/027602
- US-A1- 2004 115 097
- US-A1- 2006 024 206
- US-A1- 2006 024 206
- US-B2- 6 669 454
- SRITHARAN ET AL.: 'Acoustic Mixing at Low Reynold's Numbers' APPLIED PHYSICS LETTERS vol. 88, 02 February 2006, pages 054102-1 - 054102-3, XP012082688
- ZHU X. ET AL.: 'Microfluidic Motion Generation with Loosely-Focused Acoustic Waves' IEEE TRANSDUCERS 1997 INTERNATIONAL CONFERENCE ON SOLID-STATE SENSORS AND ACTUATORS, CHICAGO 16 June 1997 - 19 June 1997, pages 837 - 838, XP010240604
- WIXFORTH A.: 'Acoustically Driven Planar Microfluidics' SUPERLATTICES AND MICROSTRUCTURES vol. 33, 2003, pages 389 - 396, XP004506594

## Description

The present invention generally relates to microfluidic systems, and is in particular directed to the concentration and dispersion of small particles in small fluid volumes using acoustic energy in such systems.

The ongoing development and research in microfluidic processes and systems is driven by the many benefits that can be achieved by conducting processes on fluids at a microscale. In particular, in fluid analysis applications, only small volumes of fluid are required. Also, only small quantities of the associated reagents and analytes are required leading to cost savings, In addition, there are lower power requirements to operating such systems. Furthermore, the potential of mass production of such systems using integrated circuit fabrication methods make them attractive as relatively low cost, portable and disposable diagnostic devices. Greater control can be achieved in the mixing of fluids as the mixing is primarily due to diffusion between the fluids. These systems can also be used in biomedical applications where biological materials such as erythrocytes or bacteria need to be concentrated within the fluid with little to no damage of that material. Many other existing and potential applications are also envisaged for such microfluidic systems.

A simple microfluidic system would typically include a substrate formed of material such as silicon, glass, polymeric film or thermoplastic in which is etched, laser cut or moulded microfluidic channels. Such channels would typically have at least one dimension of less than 1 mm. A cover may also be provided over the channels to enclose them. A syringe or a microelectromechanical system (MEMS) may then be used to transport fluids, and any associated reagents or analytes through these channels.

More sophisticated microfluidic systems utilise piezoelectric actuators which are actuated for vibration using electrical excitation. In one such system, capillaries are mounted on or mechanically coupled to such an actuator to thereby allow for ultrasonic vibration of the capillary. This has a particular application in the concentration of biological material within pressure nodes located within the acoustic standing wave generated by the vibration of the capillary. The major disadvantage of such capillary based systems is that it is difficult to subsequently remove the fluid and the concentrated material from the capillaries.

From US 2006/0024206 A1 an apparatus and a method for fluid flow control in microfluidic applications is known. There it is described that liquid flow in and between micro-chambers is provided by an acoustic transducer. Further US 2004/0115097 A1 discusses a method for mixing at least one small quantity of liquid in a microfluidic device.

All the above described applications use a continuous flow of fluid through channels or capillaries. It is also possible to conduct microfluidic processes on individual droplets of fluid. These droplets may be applied directly to the surface of a piezoelectric substrate and may then be directly exposed to vibrations generated within the substrate using radio frequency (RF) pulsed excitation. One such system uses a piezoelectric substrate upon which the surface of the piezoelectric substrate is located at least one interdigital electrode. Application of a RF input to the electrodes generates within the piezoelectric substrate surface a surface acoustic wave (SAW), also known as a "Rayleigh" wave. The SAW excitation of the substrate surface acts to displace or manipulate one or more fluid droplets located on that surface.

It would be advantageous to be able to provide a microfluidic system which overcomes the above-noted disadvantage in the collection of concentrated particles.

Any discussion of documents, systems, acts or knowledge in this specification is included to explain the context of the invention. It should not be taken as an admission that any of the material formed part of the prior art base or the common general knowledge in the relevant art in or any other country on or before the priority date of the claims herein.

According to the present invention there is provided a microfluidic system including:
an elongate piezoelectric substrate having opposing ends thereof;
a wave generation means for generating a surface acoustic wave in the surface of the piezoelectric substrate;
a working surface through which the generated surface acoustic wave can be distributed, and upon which at least one fluid droplet within which are suspended particles can be located; and
means for varying the distribution of the wave across the width of the working surface to thereby facilitate rotation of the fluid within said droplet of fluid located in the path of the surface acoustic wave such that the suspended particles are either dispersed within the droplet or concentrated in an area within the droplet as a result of azimuthal recirculation induced within the droplet,
wherein the wave generation means includes at least one interdigital electrode deposited on the piezoelectric substrate, and electrical supply means for applying an RF input into the electrode,
wherein the means for varying the distribution of the surface acoustic wave includes an oblique reflection surface provided at the end of the piezoelectric substrate opposing the interdigital electrode, or
wherein the means for varying the distribution of the surface acoustic wave includes damping material located in a position offset relative to the general path of the surface acoustic wave at the end of the piezoelectric substrate opposing the interdigital electrode.

The facilitation of the fluid rotation results in either greater dispersion of or concentration of the particles within the fluid droplet as previously discussed.

The wave is in the form of a surface acoustic wave (SAW).

The wave generation means includes at least one interdigital electrode deposited on the piezoelectric substrate, and electrical supply means for applying a radio frequency (RF) input into the electrode.

The means for varying the distribution-of the SAW wave may in one possible arrangement include an oblique reflection surface provided at the end of the piezoelectric substrate opposing the interdigital electrode. The SAW wave is therefore reflected at an oblique angle from the reflection surface resulting in a variation in the distribution of the SAW wave across the width of the working surface.

The means for varying the distribution of the SAW wave may in another possible embodiment include damping material located in a position offset relative to the general path of the SAW wave at the end of the piezoelectric substrate opposing the interdigital electrode. The offset position of the damping material also acts to influence the reflection of the SAW wave resulting in the variation in the SAW wave distribution across the width of the working surface.

Other means not covered by the present invention to effect a distribution of the SAW wave across the width of the working surface are also known. The interdigital electrodes include a plurality of interlaced fingers, and the thickness or width of each finger may vary along the electrode in the SAW propagation direction. Alternatively, the electrode itself may vary in width continuously or in discrete steps along the SAW propagation direction.

The piezoelectric substrate itself may be conventionally formed from Lithium Niobate (LiNbOa). Other types of piezoelectric material may also be used as it is possible to induce waves in polycrystalline piezoelectric material including barium titanate (BiTaO3), lead zirconium titanate (PZT or PbZrO3, often with dopants to improve performance), zinc oxide (ZnO), aluminium nitride (AIN), and single crystal materials like lithium tantalate (LiTaO3), quartz, langasite (La3Ga5SiO-H), and gallium orthophosphate (GaPO4).

The working surface may be the surface of the piezoelectric substrate. However, if the fluid droplet is caustic, this can damage the surface of the piezoelectric substrate. Therefore, according to another arrangement, a coating may be applied to the piezoelectric substrate to protect its surface and provide the working surface thereof. A typical approach is to use a thin coating of silicon dioxide, although the use of other coating materials is also envisaged. The use of coatings could however potentially lead to absorption of the SAW wave generated in the piezoelectric substrate. Therefore, in a copending application of the Applicant, the working surface may be provided by a rigid secondary substrate coupled to the surface of the piezoelectric substrate, preferably by a fluid coupling layer. This arrangement facilitates the distribution of the SAW wave to the working surface of the secondary substrate.

The microfluidic system according to the present invention can allow for the concentration of particles on the working surface facilitating the collection of those particles. This arrangement has advantages over capillary based systems where it is difficult to collect the particles concentrated within the capillaries.

It will be convenient to further describe the invention with respect to the accompanying drawings which illustrate preferred embodiments of the microfluidic system according to the present invention. Other arrangements of the invention are possible, and consequently, the particularity of the accompanying drawings is not to be understood as superseding the generality of the preceding description of the invention.
Figure 1 is a plan view of a preferred embodiment of the present invention;
Figure 2 is a plan view of a preferred embodiment according to the present invention;
Figure 3 is a plan view of a fluid droplet showing the distribution of particles within the droplet prior to the application of the present invention; and
Figure 4 shows the concentration of particles within the fluid droplet of Figure 3 following application of the present invention.

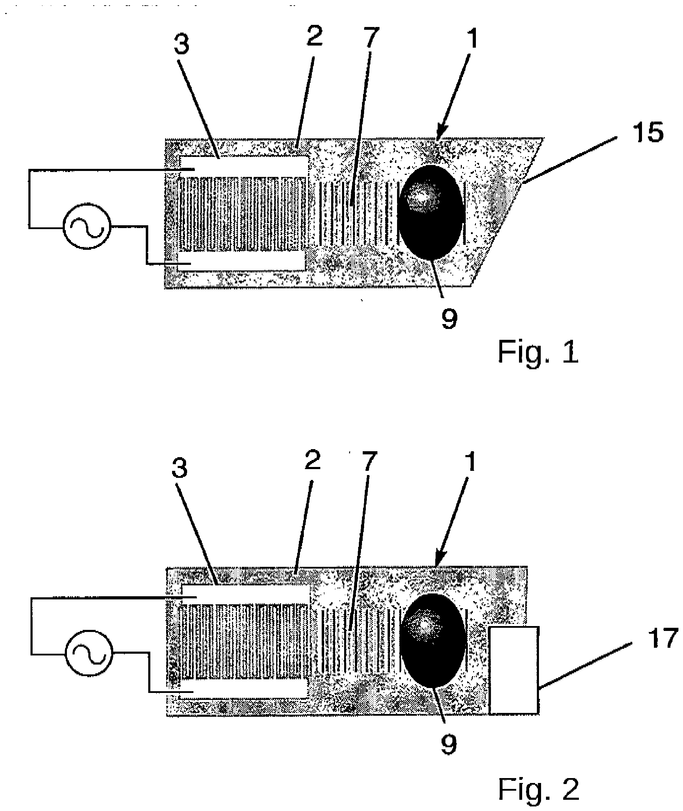

Figure 1 shows the microfluidic system according to the present invention. It includes an elongate piezoelectric substrate 1 and a single interdigital electrode 3 provided at one end of the piezoelectric substrate 1. The electrode receives a pulsed excitation through a radio frequency (RF) input 5. The pulse excitation of the interdigital electrode 3 results in a surface acoustic wave (SAW) 7 being generated in the upper surface 2 of the piezoelectric substrate 1. Depending on the configuration of the interdigital electrode 3 and the piezoelectric substrate 1, the SAW wave 7 may be either a standing or a travelling wave generated within the upper surface 2. The frequency of the pulse excitation can be typically in the order of between 10 to 1000 MHz, although this frequency can vary depending on the resonance frequency of the interdigital electrode 3 and the physical properties of the piezoelectric substrate 1. The other end of that substrate 1 being configured to provide an oblique reflection face 15 which is aligned at an angle to the general direction of propagation of the SAW wave 7 generated by the interdigital electrode 3. The SAW wave 7 will bounce off the oblique reflection face 15 at an angle to its original direction thereby resulting in a variation in the distribution of the SAW wave across the upper surface 2 of the piezoelectric substrate 1, The fluid droplet 9 located on the upper surface 2 will then be exposed to asymmetries in the SAW wave which will help to induce rotation of fluid within that droplet.

Figure 2 shows another embodiment of a microfluidic system according to the present invention which, as above, includes a piezoelectric substrate 1 having an interdigital electrode 3 located at one end thereof for generating an SAW wave 7. At the other end of the piezoelectric substrate 1 is provided a piece of damping material 17 which is located in an offset position relative to the general direction of the propagation of the SAW wave 7. This damping material 17 acts to dampen the intensity of the reflection of a portion of the reflected SAW wave 7 thereby resulting in the variation and distribution of the SAW wave within the upper surface 2 of the piezoelectric substrate 1. This arrangement also acts to encourage rotation of fluid within a fluid droplet 9 located on the upper surface 2 between the interdigital electrode 3 and the damping material 17.

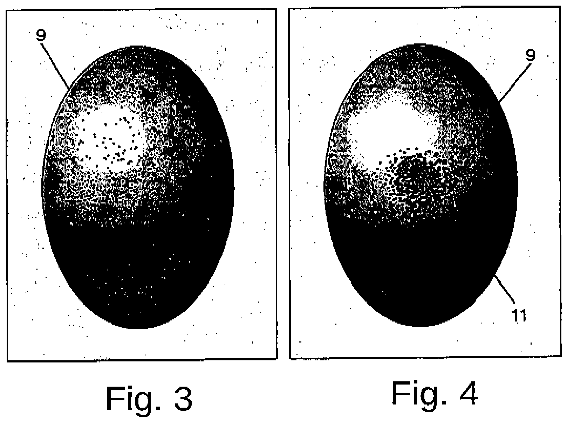

The applicant has found that the application of acoustic energy to a fluid droplet 9 placed on the upper surface 2 or a working surface coupled to this upper surface 2, when exposed to the generated SAW wave 7 will result in dispersion or concentration of small particles within the fluid droplet 9, This is best shown in Figures 3 and which shows the effect of the transmission of acoustic energy to the droplet 9, with Figure 4 showing the particles being concentrated in a mass 11 towards the centre of the fluid droplet 9.

The applicant has found that the manipulation of the particles within the fluid droplet 9 depends on the degree of power provided to the interdigital electrodes 3 and thereby, the acoustic energy absorbed by the fluid droplet 9. At relatively low power, the particles tend to disperse more within the fluid droplet 9. At a sufficiently high power however, the particles can concentrate into an area within the fluid droplet 9.

The displacement of the particles within the fluid droplet 9 is facilitated by the rotation of the fluid in the fluid droplet 9. This rotation is at least in part as a result of the viscous absorption of the acoustic energy in the droplet 9. The rotation of fluid within the fluid droplet 9 can however be encouraged if the generated SAW wave 7 is not evenly distributed to the fluid droplet 9. This could be achieved in the possible arrangement where the fluid droplet 9 in an offset position relative to the general path of propagation of the SAW wave 7 so that only a part of the droplet 9 is directly exposed to the main wave front of the SAW wave 7.

Another possible means not covered by the present invention to effect a spatial variation of the SAW wave 7 across the width of the droplet would require the interdigital electrode 3 to have a configuration that changes with respect to the width, continuously or in discrete steps, either in the thickness of the metal film that forms the electrode, the width of the individual fingers that form the electrode, or the width of the entire electrode along the SAW propagation direction. In the last arrangement, a change in the excitation frequency of the piezoelectric substrate 1 would cause a different section of the electrode 3 to drive a surface acoustic wave along the substrate 1.

Modifications and variations as would be deemed obvious to the person skilled in the art are included within the ambit of the present invention as claimed in the appended claims.

## Claims

1. A microfluidic system including:
an elongate piezoelectric substrate (1) having opposing ends thereof;
a wave generation means for generating a surface acoustic wave in the surface of the piezoelectric substrate (1); and
a working surface through which the generated surface acoustic wave can be distributed, and upon which at least one fluid droplet (9) within which are suspended particles can be located; **characterized by**
means for varying the distribution of the surface acoustic wave across the width of the working surface to thereby facilitate rotation of the fluid within said droplet (9) of fluid located in the path of the surface acoustic wave such that the suspended particles are either dispersed within the droplet or concentrated in an area within the droplet as a result of azimuthal recirculation induced within the droplet (9), wherein the wave generation means includes at least one interdigital electrode (3) deposited on the piezoelectric substrate (1), and electrical supply means for applying an RF input into the electrode (3), wherein the means for varying the distribution of the surface acoustic wave includes an oblique reflection surface (15) provided at the end of the piezoelectric substrate (1) opposing the interdigital electrode (3). or wherein the means for varying the distribution of the surface acoustic wave includes damping material (17) located in a position offset relative to the general path of the surface acoustic wave at the end of the piezoelectric substrate (1) opposing the interdigital electrode (3).

## Patentansprüche

1. Mikrofluidisches System, welches einschließt:
ein längliches piezoelektrisches Substrat (1), das gegenüberliegende Enden aufweist;
ein Wellengenerierungsmittel zum Generieren einer akustischen Oberflächenwelle in der Oberfläche des piezoelektrischen Substrats (1); und
eine Arbeitsoberfläche, durch die hindurch die generierte akustische Oberflächenwelle verteilt werden kann, und auf der sich mindestens ein Fluidtröpfchen (9) befinden kann, in dem Partikel suspendiert sind; **gekennzeichnet durch** Mittel zum Variieren der Verteilung der akustischen Oberflächenwelle über der Breite der Arbeitsoberfläche, um dadurch Rotation des Fluids innerhalb des Tröpfchens (9) des Fluids zu erleichtern, das sich in dem Pfad der akustischen Oberflächenwelle befindet, so dass die suspendierten Partikel entweder innerhalb des Tröpfchens dispergiert werden oder infolge von azimutaler Rezirkulation in einem Bereich innerhalb des Tröpfchens konzentriert werden, die innerhalb des Tröpfchens (9) induziert wurde, wobei das Wellengenerierungsmittel mindestens eine Interdigitalelektrode (3), die auf dem piezoelektrischen Substrat (1) angeordnet ist, und elektrische Versorgungsmittel zum Anlegen einer HF-Eingabe an die Elektrode (3) einschließt, wobei das Mittel zum Variieren der Verteilung der akustischen Oberflächenwelle eine schräge Reflexionsoberfläche (15) einschließt, die am Ende des piezoelektrischen Substrats (1) gegenüber der Interdigitalelektrode (3) bereitgestellt wird, oder wobei das Mittel zum Variieren der Verteilung der akustischen Oberflächenwelle Dämpfungsmaterial (17) einschließt, das sich in einer Position befindet, die relativ zu dem allgemeinen Pfad der akustischen Oberflächenwelle am Ende des piezoelektrischen Substrats (1) gegenüber der Interdigitalelektrode (3) versetzt ist.

## Revendications

1. Système microfluidique comportant :
un substrat piézoélectrique allongé (1) ayant des extrémités opposées de celui-ci ;
un moyen de génération d'onde pour générer une onde acoustique de surface dans la surface du substrat piézoélectrique (1) ; et
une surface de travail à travers laquelle l'onde acoustique de surface générée peut être distribuée, et sur laquelle au moins une gouttelette de fluide (9) à l'intérieur de laquelle des particules sont en suspension peut être positionnée ; **caractérisé par**
un moyen pour faire varier la distribution de l'onde acoustique de surface à travers la largeur de la surface de travail pour faciliter ainsi la rotation du fluide à l'intérieur de ladite gouttelette (9) de fluide située sur le chemin de l'onde acoustique de surface de telle sorte que les particules en suspension sont dispersées à l'intérieur de la gouttelette ou concentrées dans une zone à l'intérieur de la gouttelette en conséquence d'une recirculation azimutale induite à l'intérieur de la gouttelette (9), dans lequel le moyen de génération d'onde comporte au moins une électrode interdigitée (3) déposée sur le substrat piézoélectrique (1), et un moyen d'alimentation électrique pour appliquer une entrée RF dans l'électrode (3), dans lequel le moyen pour faire varier la distribution de l'onde acoustique de surface comporte une surface de réflexion oblique (15) disposée à l'extrémité du substrat piézoélectrique (1) à l'opposé de l'électrode interdigitée (3), ou dans lequel le moyen pour faire varier la distribution de l'onde acoustique de surface comporte un matériau d'amortissement (17) situé à une position décalée par rapport au chemin général de l'onde acoustique de surface à l'extrémité du substrat piézoélectrique (1) à l'opposé de l'électrode interdigitée (3).
